# EUROPEAN PATENT SPECIFICATION

(11) **EP 1 887 919 B1**
(45) Date of publication and mention of the grant of the patent: **22.02.2017**
(21) Application number: 05801033.1
(22) Date of filing: 16.09.2005
(51) Int. Cl.: A61B 1/00, G01N 25/72, G01N 7/00, G01M 3/28

(54) **SYSTEMS AND METHODS FOR ENDOSCOPE INTEGRITY TESTING**
SYSTEME UND VERFAHREN ZUR UNTERSUCHUNG DER INTEGRITÄT VON ENDOSKOPEN
SYSTEMES ET METHODES POUR TESTER L'INTEGRITE D'ENDOSCOPES

(30) Priority: 06.05.2005 US 123335; 06.05.2005 US 123336
(43) Date of publication of application: 20.02.2008
(73) Proprietor: MINNTECH CORPORATION, Minneapolis, MN 55447 (US)
(72) Inventor: KUBACH, Melissa, Chesterfield, MO 63305 (US)
(74) Representative: Huygens, Arthur Victor
(86) International application number: PCT/US2005/033418
(87) International publication number: WO 2006/121462

(56) References cited:
- EP-A2- 0 992 212
- US-A- 5 211 915
- US-A- 5 317 896
- US-A- 5 537 880
- US-A- 5 788 688
- US-A- 6 112 578
- US-B2- 6 408 682
- US-B2- 6 408 682

## Description

### BACKGROUND

### 1. FIELD OF THE INVENTION

This invention relates to the field of integrity testing for endoscopes, in particular to integrity testing using pressure loss and humidity detection.

### 2. DESCRIPTION OF THE RELATED ART

As medical science has advanced, it has recognized that the ability of diagnostic evaluation procedures to detect various maladies early in their development provides one of the primary tools in preventing adverse outcomes. At the same time, highly invasive procedures, even if effective at their intended task, introduce their own dangers. Invasive procedures require a long time to heal, are expensive, and can result in additional costs due to extensive hospitalization, additional therapies to recuperate, and lost productive time. In an attempt to provide for medical services at reasonable cost to most of the population, it is desirable to have maladies detected, and treated early and to provide both the detection and intervention using procedures which are as minimally invasive as possible to speed up recovery time and reduce risks introduced from the performance of the procedure.

To provide for many minimally invasive procedures, medicine has seen a dramatic rise in the use of endoscopic instruments. Traditionally, extensive invasion of the body was required to allow a surgeon to see where he was working as well as to allow the body to admit his hands, which are relatively large instruments, during a procedure. The use of endoscopes provides for an alternative solution in both cases. Endoscopes are long slender medical instruments which can be inserted through a relatively small orifice in the body. With advanced optics, an endoscope can allow a doctor to see structures without the need for invasive surgery and often better than his normal eyesight would permit. Further, by including specially designed and small-sized instruments, a doctor's hands need not be admitted into the body of the patient to perform procedures which allows for still further reductions in the need for large entry points. Endoscopic surgical tools have advanced greatly in recent years allowing a doctor to examine internal structures, take biopsies, and even perform some types of surgery. While many endoscopic procedures utilize one or more small incisions, others utilize natural body opening such as the mouth, nose, ear, rectum, vagina, or urethra. The latter type of endoscopes are particularly useful when related to disease of the gastrointestinal tract or reproductive system and because they are inserted in naturally occurring openings, are considered to be minimally invasive.

An endoscope is generally used in a procedure by being inserted into the opening (whether natural or artificial) by a doctor trained in its use. The endoscope is then guided to the area to be examined through the use of an external control on the end of the endoscope remaining outside the body. In some cases, such as when the colon is being examined, the path taken by the endoscope is itself evaluated. In some alternative cases, the endoscope is maneuvered to reach a particular destination which is to be examined or operated on. In either case, to facilitate the movement of the endoscope, the endoscope is generally a long flexible tube sized and shaped for the particular procedure to be performed and will be capable of being guided through body structures, without damage, through what is often a convoluted path.

The endoscope will include instruments related to its function and the particular procedure being performed. These instruments will generally first provide for visual or other detection apparatus and related image recordation. These instruments will serve first to allow the operator to guide the instrument, but also to provide records of what was done and to store particular images for later evaluation. The tube may also include ports on the portion external to the body which allow for medications, water, air, or instruments to be inserted externally and passed through the endoscope to the point where the internal end of the endoscope is located. The instruments can then extend from the internal end of the endoscope to allow for the performance of medical activities. These instruments will generally be controlled externally while what they are doing is monitored using the detection apparatuses. Endoscope procedures may include, but are not limited to, biopsies of material; the introduction of medical agents, irrigation water, or apparatuses; cleaning of an area for improved visual characteristics; and some surgical procedures.

In most endoscopes, either the natural orifice through which it is inserted defines a maximum size of the scope, or the scope is generally desired to be as small as possible to minimize the size of an incision necessary to insert it. At the same time, it is necessary for the endoscopes to include control mechanisms outside the body, as well as generally sophisticated cameras or other imaging apparatus, and ports for, or inclusion of medical application delivery devices. Further, electronics and systems to allow for signals to be transported from the control device outside the body to the tip of the endoscope which is inaccessible inside the body are necessary. Hook-ups to external computers to provide for interpretation of data signals are also generally required. All of these sophisticated systems make endoscopes quite expensive and sophisticated devices. Further, the popularity of endoscopic procedures means that most medical providers need a relatively large number of endoscopes, even of similar type, in order to be able to provide for all the procedures they are used for.

Even while use of endoscopic instruments is minimally invasive, without proper care, they can still transmit disease. It is necessary that endoscopes be well cleaned and sterilized after each use to prevent transfer of potentially dangerous agents between patients. Endoscopes will also often operate in what can be considered a wet environment or other environment where body fluids are in contact with the exterior of the endoscope which is generally a form of rubber tubing. Cleaning and sterilization systems also often utilize liquids in cleaning. Because an endoscope's sophisticated design uses a high number of components which can be adversely effected by moisture, generally an endoscope will be sealed from external fluid invasion by having its components be sealed inside the flexible plastic or rubber sleeve. Components which are not sealed during use are alternatively sealed by caps during cleaning as the entire instrument can be inserted in liquid during the cleaning process.

The plastic or rubber sleeve can fail over time and develop holes or fractures from repeated use and general wear and tear. Further, improper handling or use of the scope can damage the sleeve. If the sleeve develops holes, cracks or other points of failure, it can allow the introduction of moisture to the internal component of the endoscope. If this occurs inside the body of a patient, it may allow microorganisms to travel with the endoscope. More commonly, however, the failure will allow for cleaning agents to get inside the endoscope. Any of these intrusions to the endoscope can be dangerous to the endoscope. Even a single drop of water inside the endoscope can result in sensitive electronic devices becoming damaged and become unworkable. Further, the intrusion of even a small amount of body fluid can result in a non-sterile instrument.

Beyond the possibility of fluid intrusion from cracks or breaks in the coating, most endoscopes are required to have some access to internal structures to allow for external devices, such as computers, to operate in connection to the internal components. In use, these ports are generally plugged by a connector or similar device. After use, a sealer cap or related device is generally placed in the ports to seal them from external invasion. These caps can also develop holes, seals can break down, or protective covers may be incorrectly installed. Any of these situations can also lead to fluid invasion of the endoscope.

To clean endoscopes between procedures, generally the endoscope is first disconnected from associated computer apparatus, is wiped down and open channels are suctioned and washed to remove most of the material on the scope. The scope is then sent to be cleaned. As cleaning requires specific immersion or saturation of the endoscope with liquid materials, it is important that the scope be checked for leaks prior to this cleaning; otherwise a leak could admit cleaning materials and damage the endoscope. Traditionally, leaks were tested for by a technician who would access the internal structure of the endoscope, and if a leak was detected, connect an air source and introduce air to raise the internal pressure of the scope above the ambient to inhibit fluid invasion during cleaning and prior to repair.

In the most basic test methodology, the scope was immersed in fluid (usually water) while held at a positive pressure and left there for a period of time. During this time, the technician would look for bubbles rising from the endoscope indicating loss of air from the internal structure. This methodology was fraught with problems. In the first instance, placing the structure in water tended to produce bubbles. Further, solutions used to initially clean the endoscope could themselves create bubbles when interacting with the water. Still finally, movement of the scope in the water could conceal or introduce bubbles.

To try and get around this problem, systems were introduced which allowed the internal area of the endoscope to be pumped to a particular pressure. The user would then watch a gauge or indicator to determine the pressure decreased over a period of time. This was also notoriously unreliable as technicians did not wish to watch the gauge for the period of time to insure there were no problems. Still further, pressures which could be reached by hand were lower than desired. To try and get around this issue, other systems tried to automate the provision of air, and the monitoring of pressure. One such system is described in United States Patent No. 6,408,682, the entire disclosure of which is herein incorporated by reference.

These systems still had problems, however. In the first instance, the systems were essentially passive. Many holes in an endoscope are very small. When the small size is combined with the plasticy nature of the coating, and the interaction between the coating and the hands of the technician or external devices, the endoscopes positioning during testing may result in a hole being plugged by the presence of a bend in the material at that point, or a hand or other support device.

Still further, these systems merely tested if there was a pressure leak. They did not actually test to determine if material had invaded the endoscope. A leak is not a problem for an endoscope other than the fact that it may introduce material into the endoscope which can damage it or transfer disease. Therefore, if a leak is found, it may not indicate that there is a problem with the endoscope, it may simply indicate that there is the potential for a problem in the future. In effect, a leak needs to be fixed but does not necessarily indicate that there is any additional damage from fluid invasion.

Still further, even if there is no leak, it does not actually indicate that there is not a problem with the endoscope. In particular if a sealing cap or similar structure was not attached correctly during cleaning, fluid may have been introduced internally to the endoscope even if the sleeve is intact. It is not possible for prior devices to detect this situation.

If a small amount of water was introduced into a scope and is detected quickly, the scope can be repaired, dried, and returned to service for a much lower cost that if the scope has had fluid invasion for a period of time and the fluid has been allowed to flow through components and cause additional damage. Further, if there is a concern of possible leaks, the scope can be cleaned while under a positive pressure to allow for the scope to resist any fluid invasion. Once cleaned, a damaged endoscope can be put aside for later repair.

### SUMMARY

A method and a system is provided for testing the integrity of an endoscope comprising the steps of: obtaining an endoscope; supplying gas to an air enclosure which includes an internal volume of said endoscope to pressurize said air enclosure; sealing said air enclosure; measuring the pressure of said gas in said air enclosure; and using the outcome of said steps of measuring and re-measuring to determine if said pressure has changed sufficiently to indicate a leak in said endoscope, characterized in that the method further comprises the steps of instructing a user to manipulate said endoscope while said air enclosure is pressurized, said manipulation causing movement of the endoscope; indicating that said manipulation has been completed; and re-measuring the pressure of said gas in said air enclosure after said manipulation.

US 6,408,682 discloses a conventional leak detector test by submerging the endoscope in water and watching for bubbles that may arise from the water if there is a leak. There are no steps of (i) indicating when the manipulation of the endoscope is complete; (ii) measuring and re-measuring pressure in the endoscope after movement of the endoscope; and (iii) using the outcome from the measuring and re-measuring to determine if there is a pressure drop and therefore a leak in the endoscope.

Because of these and other problems in the art, described herein, among other things, are systems and methods for determining the integrity of an endoscope. The systems and methods provide for an air enclosure, which includes the internal volume of the sleeve or tubing of the endoscope, to be pressurized with air at a higher pressure than ambient. The air enclosure is then tested for an inability to maintain the pressure. The pressurization and measurement is automated and controlled to eliminate concerns of human error in the detection process. Further, the process specifically supplies that the endoscope be moved and manipulated while pressurized, and that it be supported during the test to make sure that endoscope positioning during testing does not hide a hole.

Further, the systems and methods discussed herein provide that the internal structure of the endoscope be tested for the presence of fluid in the form of humidity, even if no leak is detected. This step provides that if fluid was inadvertently introduced to the internal structure of the endoscope, instead of being introduced through a leak, the fluid's presence can be detected. Still further, if the endoscope is known to have a leak, the presence of fluid already in the endoscope, can indicate the likelihood of other damage to the endoscope which needs to be repaired.

Described herein, in an embodiment, is a method for testing the integrity of an endoscope comprising the steps of: obtaining an endoscope; supplying gas to an air enclosure which includes an internal volume of the endoscope to pressurize the air enclosure; sealing the air enclosure; measuring the pressure of the gas in the air enclosure; instructing a user to manipulate the endoscope while the air enclosure is pressurized; re-measuring the pressure of the gas in the air enclosure after the manipulation; and using the outcome of the steps of measuring and re-measuring to determine if the pressure has changed sufficiently to indicate a leak in the endoscope.

In an embodiment of the method the step of instructing includes instructing manipulation of endoscope buttons or instructing manipulation of knobs which causes movement of endoscope tubing.

In an embodiment of the method the step of using comprises comparing the pressure from the step of measuring to the step of re-measuring and comparing the difference to a predetermined minimum value. The step of re-measuring may also be repeated a plurality of times.

In an embodiment of the method, in the step of measuring, the pressure of the gas is at least 27579 Pa (4 lbf/in²) or about 27579 Pa (4 lbf/in²).

In an embodiment the method further comprises the step of placing the endoscope in a holding device prior to the step of measuring. The holding device may comprise a holding bin having a mat on its base, the mat including a plurality of fingers.

In an embodiment there is described herein an integrity tester for an endoscope, the tester comprising: means for supplying gas to an air enclosure which includes an internal passage of the endoscope to pressurize the air enclosure; means for sealing the air enclosure; means for measuring the pressure of the gas in the air enclosure; means for manipulating the endoscope while the air enclosure is pressurized; means for detecting that the manipulation is complete; means for re-measuring the pressure of the gas in the air enclosure after the manipulation; and means for computing a result using the outcome of the steps of measuring and to determine if the pressure has changed sufficiently to indicate a leak in the endoscope.

In an embodiment of the tester, the means for manipulating comprises an interaction system for instruction a user to manipulate the endoscope and indicate to the tester that the manipulation has been completed.

In another embodiment of the tester, the pressure of the gas is at least 4 lbf/in². The tester may comprise a holding device for the endoscope which may comprises a holding bin having a mat on its base, the mat including a plurality of fingers.

In an embodiment there is described an integrity tester for an endoscope, the tester comprising: an air compressor for supplying gas to an air enclosure which includes an internal passage of the endoscope to pressurize the air enclosure; a control system; a pressure sensor; and an interaction system, the interaction system being capable of instructing a user to manipulate the endoscope while the air enclosure is pressurized and allowing the user to indicate that the manipulation is complete; wherein the pressure sensor measures the pressure in the air enclosure at least once prior to the manipulation of the endoscope and at least once after the manipulation of the endoscope; and wherein the control system can use the output of the pressure sensor to detect a loss of the pressure in the air enclosure.

In another embodiment, the interaction system comprises at least two lightable buttons, the pressure of the gas is at least 4 lbf/in², or the tester further comprises a holding device for the endoscope which may comprise a holding bin having a mat on its base, the mat including a plurality of fingers.

### BRIEF DESCRIPTION OF THE DRAWINGS

FIG. 1 shows a front prospective view of an embodiment of a device for testing the integrity of endoscopes.
FIG. 2 shows a rear perspective view of the embodiment of FIG. 1.
FIG. 3 shows the embodiment of FIG. 1 with the cover removed.
FIG. 4 shows a block diagram of a control system.
FIG. 5 shows a block diagram of the elements of the air path.
FIG. 6 shows a flowchart of the steps in one method of operation.

### DESCRIPTION OF PREFERRED EMBODIMENT(S)

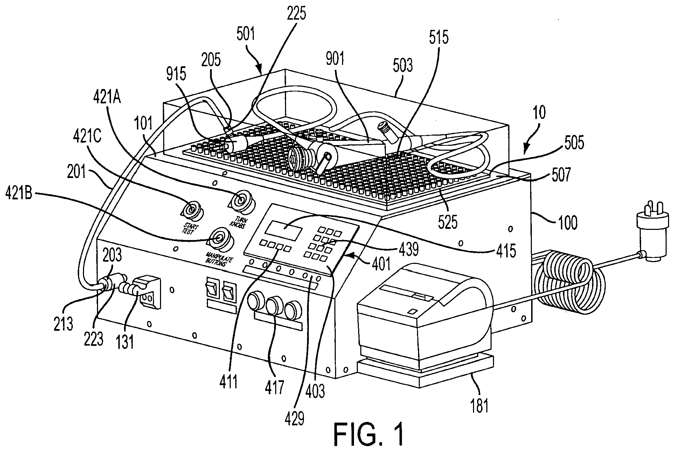

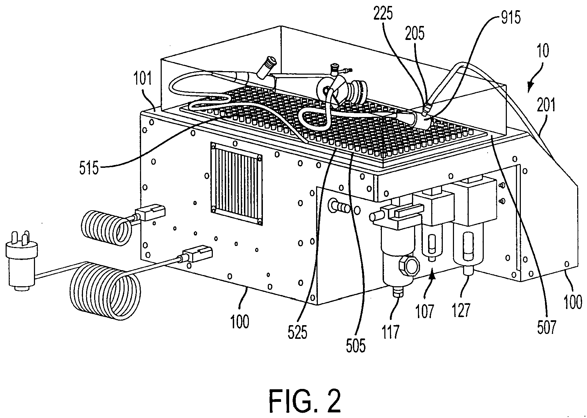

FIGS. 1 through 3 depict an embodiment of an integrity tester (10) for endoscopes (901). Generally the integrity tester (10) comprises a main housing (100), which houses the electronic devices for performing the testing, a tube (201) connected thereto and having a connector for attaching to an endoscope (901), and a holding device (501) for supporting the endoscope (901) during testing.

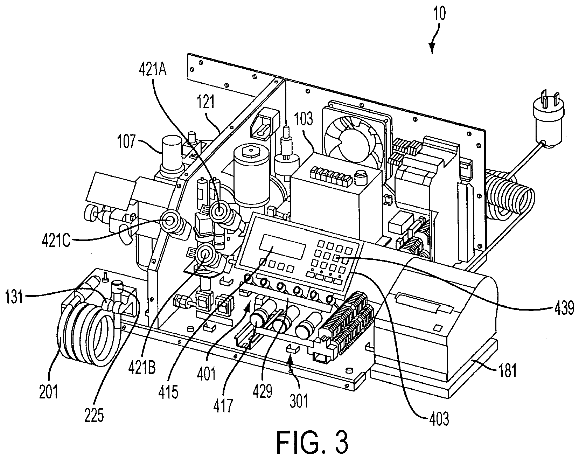

The main housing (100) is shown in greater detail in FIG. 3 as the outer cover (101), which is generally present to prevent the introduction of dust or other materials to the internal components, has been removed. The main housing (100) houses an air compressor (103) which is connected to an air path leading to the tube (201), a control system (301), and an interaction system (401).

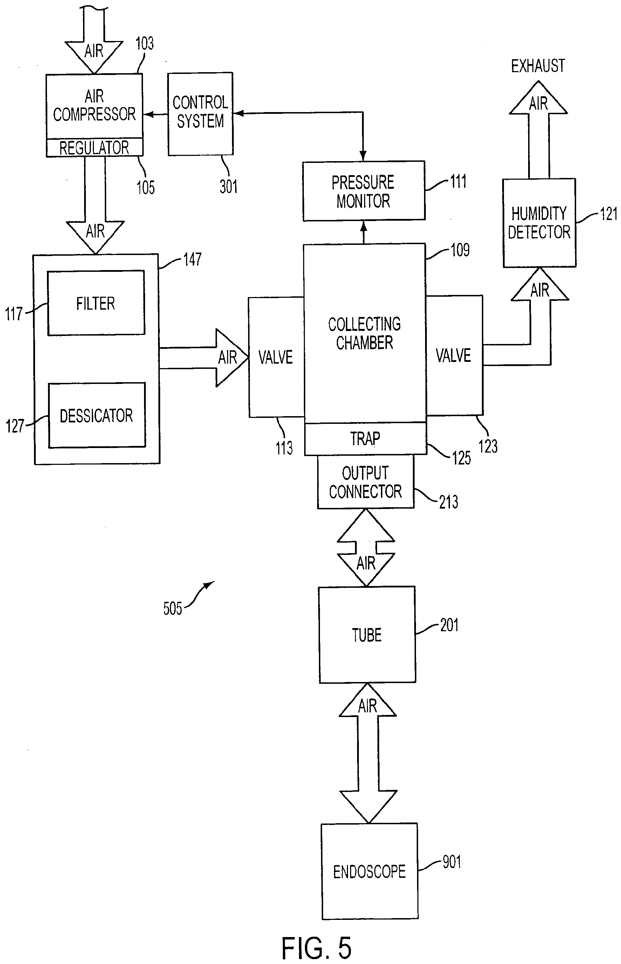

During operation, the air compressor (103) will provide air to pressurize the internal area of the endoscope's (901) tubing. The path of this air and the objects it interacts with are shown in the block diagram of FIG. 5. The air flow path (505) is defined to allow air, under pressure, to flow from the air compressor (103) into the internal area of the endoscope's (901) sleeve or tubing. The air compressor (103) will generally be controlled by the control system (301) and will include a regulator (105) to provide air at a relatively constant pressure into the air flow path. This pressure will generally be selected as the desired pressure to which the endoscope (901) is to be pressurized. A regulator (105) is not strictly necessary, but is preferred to prevent over-pressurization of the endoscope (901) and possible damage. The air to be used is taken in by the air compressor (103) from external or environmental air. In an alternative embodiment, a canister or related container of pressurized air or other gas or gases may alternatively be provided instead of using air compressor (103). Either air source will provide for the air to enter the air path. Once in the air path, the air will pass through a filter array (107). The filter array (107) may include any number of filtration systems (117) which serve to capture dust, pollens, microorganisms, pollutants, or other materials suspended in the air. If desired, the filter array (107), may also remove certain gases from the air, but this will generally be unnecessary. The filter array (107) will also generally include a dessicator (127) which serves to remove moisture from the air so that the air stream is dryer than the environmental air to prevent the introduction of humidity to the endoscope (901). Once through the filter array (107), the air will pass through a valve (113) and into a collecting chamber (109) where a pressure monitor (111) will generally be located. The collecting chamber (109) will generally include a second valve (123) which will lead to the humidity detector (121) and is connected to output connector (213) to allow air flow into the tube (201). During the initial leak testing and pressurization, this second valve (123) will usually be closed to prevent air from flowing to the humidity detector (121).

Within the chamber (109) there may be a trap (125) or other object to prevent liquid from back flowing from the tube (201) into the integrity tester (10). As is discussed later, since humidity in the air is to be tested by the humidity tester (121), the trap (125) will generally not be a desiccator or similar device designed to remove fluid from the air, however the trap (125) may prevent a large quantity of liquid from back flowing into the integrity tester (10) and potentially damaging its sensors or electronics.

The chamber (109) is generally attached to and in fluid communication with an output connector (213) which is located on the external side of the cover (101). The tube (201) is generally connected at its proximal end (203) to the output connector (213) through a mating connector (223) attached thereto. These connectors (213) and (223) will generally be designed for relatively quick connection and disconnection of the tube (201) to the integrity tester (10). This allows the tube (201) to be swapped out for a different tube (201) quickly and easily. The tube (201) may be of any length, shape, or size but will generally be flexible and manufactured of material with a relatively high resistance to deformation from an internal pressure increase. The tube (201) is preferably of relatively long length to facilitate continued attachment of the endoscope (901) to the integrity tester (10) during cleaning, as discussed later. The tube (201) is preferably coiled in a fashion whereby the tube (201) will resiliently return to the coil even when pulled out of that shape. This allows the tube (201) to be of fairly extensive length, while allowing the tube (201) to be stored in a relatively small area when not having a force acting thereon.

The distal end (205) of the tube (201) will generally include a connector (225) sized and shaped to be attached to an inlet port (915) on an endoscope (901) for providing air to internal area of the sleeve of the endoscope (901). This connector (225) will generally be specifically chosen based on the size and brand of the endoscope (901) to be tested. The housing (100) may include a rest (131) for supporting the connector (225) when an endoscope is not attached.

By providing for quick connects at both the proximal (203) and distal end (205) of the tube (201), a user of the integrity tester (10) can easily swap out a first endoscope (901) for a second endoscope (901) once testing is complete on the first, even if the endoscopes (901) are of completely different designs. The user will first disconnect the tube (201) from the endoscope (901). If needed, the user can then disconnect the tube (201) from the air path and the integrity tester (10) and select a different tube (201) for connection, connect the new tube (201) to both the integrity tester (201) and the endoscope (901), and test the next endoscope (901). As is discussed later, if the control system (301) utilizes information about the type of endoscope (901) and tube (201) used, the tube (201), in an embodiment, may include a device for signaling to the control system (301), when it is attached, the particulars that the control system (301) needs to know about the type of endoscope (901) to be attached to the tube (201) and the size and shape of the tube (201). In this way, the control system (301) can perform automatic calibration and alteration of parameters based on the type of tube (201) and endoscope (901) attached.

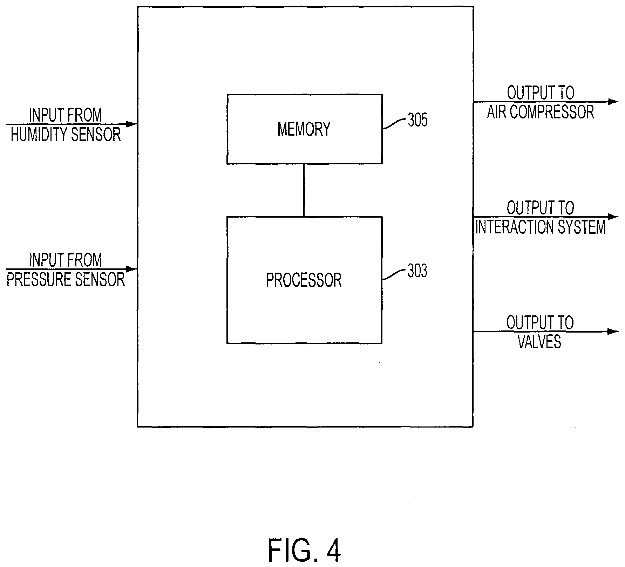

The control system (301) is shown in block diagram in FIG. 4 and serves to generally control operation of the integrity tester (10) and to perform testing functions and provide user feedback via the interaction system (401). The control system (301) will generally comprise a circuit board including a processor (303) and associated electronics. The processor (303) may be of any type known to those of ordinary skill in the art and may, in an embodiment, comprise a general purpose processor (303) running software programs in an attached memory (305), or may comprise a single purpose processor (303) specifically programmed or built to control the integrity tester (10). The control system (301) will also include other electronics and components necessary to operate the interaction system (401) and to take in and interpret data from the pressure sensor (111) and humidity sensor (113). The control system (301) may also include associated memory and storage (305) for storing testing information during and after testing and operational information for the control system (301) or for storing or interpreting calibration information. The control system (301) may also include systems for connecting computing devices, both via networks and using hookups for portable devices, or for connecting with hard copy generation systems such as printer or other hard copy generator (181).

The interaction system (401) serves as an interface between the integrity tester (10) and the user allowing the integrity tester (10) to provide information to the user. The interaction system (401) will generally be linked to the control system (301) and may comprise any form of display (403) known to those of ordinary skill in the art. In an embodiment, the display (403) will comprise a screen such as, but not limited to, an LCD screen capable of both providing a visual indicator of information. The system may also include indicators or lights to provide specific information in that fashion. In addition to providing information to the user, the integrity tester (10) may also take input from a user such as by them pushing buttons, turning knobs, flipping switches or otherwise acting on actuators. The system may also additionally or alternatively comprise devices capable of generating or understanding audible or other signals.

In the depicted embodiment, the interaction system (401) comprises LED screen (415) and associated buttons (419). There are also included three separate large buttons (421) one of which is labeled "start test" (421 C), another is labeled "turn knobs" (421 A) and another of which is labeled "manipulate buttons" (421B). All of these buttons (421) can light up indicating that they should be depressed when an action is completed by the user. Further, there are a string of indicator lights (417) relating to the passing or failing of various tests by the attached endoscope (901). There are also a variety of buttons (429) to allow the user to instruct the integrity tester to implement testing functions and report the results of diagnostics or self tests or to perform other actions outside normal endoscope (901) testing procedures. There may also be included a keypad (439) or like structure for general alphanumeric input.

So that the endoscope (901) need not be held by the user during testing, there is provided a holding device (501). The holding device (501) ideally will provide for hands-free support of the endoscope (901) in a fairly controlled manner. The holding device (501) will generally support the endoscope (901) so that while supporting the endoscope (901), the endoscope (901) will have relatively minimal surface contact both with the holding device (501) and with itself. In the depicted embodiment, this comprises a holding device (501) comprising a bin (503) having a surfaced mat (505) on the base (507). The surfaced mat (505) preferably will have cylinders, cones, pyramids, or other rubber or plastic fingers (515) that extend from its base surface (525) upward. The fingers (515) may be of any size, shape, design, or material, but will preferably be designed so as to resiliently support the endoscope (901) without any potential damage to the endoscope (901) during the testing process. The endoscope (901), when placed on the mat (505), is therefore supported by the fingers (515) in a solid manner but the vast majority of the surface area of the endoscope (901), even that resting on the mat (505), is not in contact with any surface which could impair air flow through a hole. In the depicted embodiment, the holding device (501) is of sufficient size that the endoscope (901) can be laid therein without having the endoscope (901) overlap itself. This size and design is preferred, but not required, as space constraints may require it to have a smaller area. In an alternative embodiment, the endoscope (901) may be supported by a device which allows it to hang instead of being in a bin to also provide for minimal surface contact.

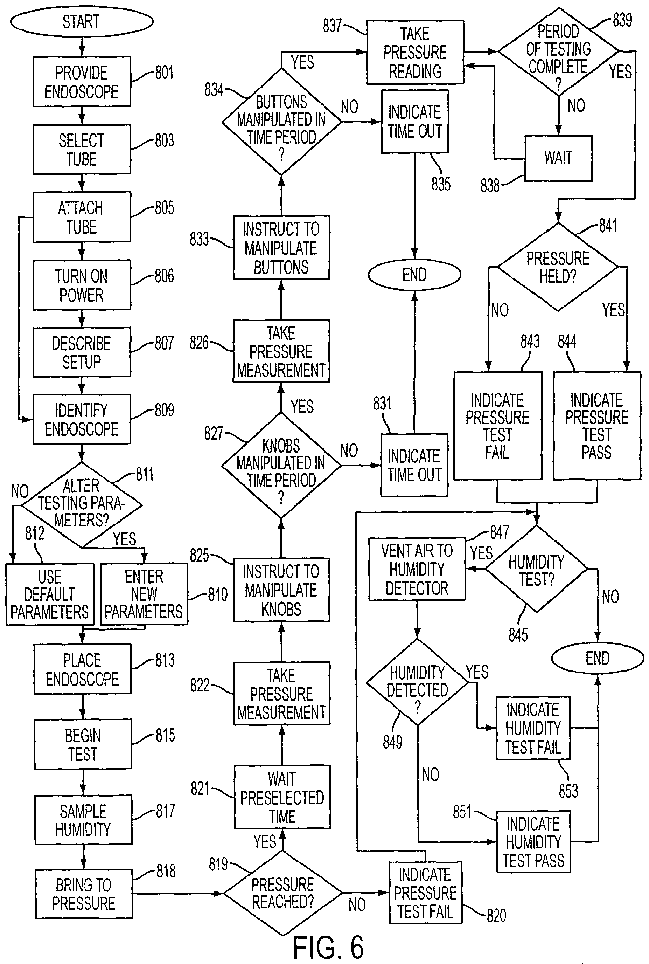

In operation, the integrity tester (10) generally works in accordance with steps such as those in the embodiment of the flowchart of FIG. 6. In step (801) the user, who will often be a laboratory technician or similar individual, will provide an endoscope (901) to be tested. The user will select an appropriate tube (201) in step (803) to fit the endoscope (901) to be tested. The tube (201) will be sized and shaped to attach to the endoscope (901) being provided. The user in step (805) will attach the selected tube (201) at its proximal end (203) to the air path and at its distal end (205) to the endoscope (901) in preparation for testing using the connectors (225) and (223).

Once the tube (201) is connected between the endoscope (901) and the integrity tester (10), there is created an air enclosure. The air enclosure includes the internal area of the endoscope (901) sleeve, the inside of tube (201) and chamber (109). In step (806) the power to the integrity tester may be turned on or may have already been on. In step (807) the user may provide specifics of the endoscope (901) to be tested and possibly the tube (201) being used to the integrity tester (10). Alternatively, step (807) may be unnecessary or may be performed automatically through the attachment of the tube (201) as previously discussed. This step can serve to provide calibration information and pass/fail parameters based on the particular tube (201) and/or endoscope (901).

The user in step (809) may enter a serial number or other identifier associated with the particular endoscope (901) so as to identify it to the integrity tester and provide for specific test results to become associated with the endoscope (901). This data entry of step (809) may also include entry of other information such as but not limited to time, date, last use, or endoscope (901) ownership information. In step (811), the user may then decide whether or not to alter parameters of the testing (such as the length of the test, the sensitivity of the test, or even the types of test to be performed or repeated) altering then in step (810). Alternatively in step (810) default or previously selected parameters may simply be used or confirmed.

In step (813) the user will place the endoscope (901) into the holding device (501) and indicate to the integrity tester (10) that testing is to begin in step (815). It is not required that the user place the endoscope (901) in the holding device (501) during testing but it is preferred. Once the endoscope (901) has been placed by the user, the user will indicate to the integrity tester (10) to begin the test in step (815). Generally, this will occur by pushing the start button (421C) on the integrity tester (10). Once the testing has been started, the control system (401) will commence testing. In an embodiment, the first step (817) of the testing process will be to sample the humidity of environmental air. While this value is generally only useful if a humidity test is to be performed, it is usually beneficial to have it performed first as the air compressor (101) is starting up to provide air to the endoscope (901). Once the air compressor (101) is active, the control system (301) will open valve (113) between the compressor (101) and the chamber (109) to allow for pressurized air to go from the compressor (101) to the tube (201) and endoscope (901), passing through the filter array (107) on its way there. This influx of air will pressurize the air enclosure in step (818) and thus the endoscope (901) to a desired first value. The valve (113) will then be closed to seal the air enclosure.

In order to make the pressure test as accurate as possible, the pressure inside the endoscope (901) is generally as high as possible, but should not be sufficiently high to cause damage to the endoscope (901). Traditionally, pressure provided to the endoscope (901) has been limited to just a couple of pound feet per square inch as that is all a hand pump can easily generate. Even in water bath measurements where air compressors were used, pressures simply above the weight of the water on the endoscope (901) (generally around 3 lbf/in²) were used. Higher pressures are beneficial as they provide for a greater degree of accuracy in endoscope (901) testing. With a higher pressure it is more likely that a hole in the endoscope (901), which may be held closed by the flexible nature of much of the endoscope (901) sleeve, will be forced open by the air pressure. Air at a higher pressure is therefore more likely to escape from a small hole held shut by surface tension, gravity or similar forces making it more likely that small holes are detected. Further, for a hole of equal size, the pressure internal to the air enclosure will often change more dramatically at a higher pressure than at a lower pressure. It is preferred, in an embodiment, that the air pressure in the air enclosure and therefore in the endoscope (901) be raised to a pressure at or above 4 lbf/in² and generally less than 8 lbf/in² but that is by no means required. It is even more preferred that the pressure be about 4.5 lbf/in².

In an embodiment, the integrity tester (10) will monitor the increase in pressure in the endoscope (901) as the pressure is raised. If over a pre-selected window of time the integrity tester (10) is unable to obtain the desired resultant pressure in step (819) in the air enclosure, it is determined that the endoscope (901) fails the pressure test and the result is so indicated to the user via interaction system (401) in step (820). Alternatively, a failure to reach pressure could indicate a problem with the tube (201) or a bad connection. To address this situation, a retest may be suggested to the user. Depending on the embodiment, in the case of failure due to an inability to reach target pressure, the integrity tester (10) may continue to perform the humidity test discussed below, may alter the humidity test parameters such as to perform as extended humidity test, or may terminate the test process.

In addition to determining if an endoscope (901) can reach the target pressure, the control system (401), in an embodiment, may measure the length of time it takes to bring the endoscope (901) up to pressure and/or the rate that the pressure increases. The first pressure test may therefore involve this calculation of time to bring the air enclosure up to pressure. If it takes too long to bring the endoscope (901) up to pressure or if the rate is too low, even if the endoscope (901) can reach the target pressure in the window of time, the integrity tester (10) may determine that a leak exists and fail the endoscope (901).

If the endoscope (901) is able to brought up to pressure within the window of calculation and at a sufficient rate of speed, the integrity tester (10) will begin the pressure testing of steps (821) and (823) to determine if the pressure is maintained over time. The test generally begins when the valve (113) is closed sealing the air enclosure from outside air sources. Once sealed, the integrity tester (10) will wait a short period of time in step (821) to allow the air enclosure's pressure to stabilize before initial pressure rejuvenates as taken in step (822).

To determine if pressure is lost, the integrity tester (10) may use a variety of calculation techniques. Generally the air enclosure will include pressure sensor (111), as discussed previously, to measure the pressure of air in the air enclosure. Regardless of how well components are sealed, however, there will always be some slight pressure loss due to natural bleeding of components and stretching of some components. The pressure measurement may therefore comport to any formula known to one of ordinary skill in the art to detect loss of pressure. In a preferred embodiment, the integrity tester (10) utilizes a time pressure average of a plurality of pressure measurements at the start of testing. In an embodiment, noise and other factors are removed from this determination. This starting pressure is then compared against a similar average at the end of testing. The change in pressure is then determined and adjusted for the accuracy of the instrument. The result is then compared against an allowed or threshold change. If the calculated change is greater, the endoscope (901) is failed; if less, the endoscope (901) is passed. In an alternative embodiment, pressure measurements can be performed at a plurality of points during the test period instead of just at the beginning and the end. It is recognized that due to the flexible nature of the endoscope (901) and the fact that few if any air seals are 100% accurate, all endoscopes (901) will show a small amount of leakage. However, there is usually set a maximum amount of leakage during the time period which is acceptable without determination that a hole exists.

While the pressure is maintained in the endoscope (901) by maintaining the seal on the air enclosure, the control system (401) will indicate that the user should perform various manipulations on the endoscope (901). In the depicted embodiment, these are provided by having the test hold while a user is instructed to perform a particular manipulation on the endoscope (901). Once the user has performed the manipulation, they indicate to the control system (301) that the manipulation has been performed which allows the test to continue.

In the depicted embodiment, once the system has pressurized the air enclosure it will wait a preselected period of time in step (821). During this period of time a pressure measurement may be taken in step (822). After the preselected period of time has passed, the user will be instructed to manipulate the knobs of the endoscope in step (825). This will often be signaled by the button (421 A) corresponding to knob movement beginning with a flash and a possible audible signal. Once so instructed, the user would pick up the endoscope (901) at its control portion and manipulate all the knobs of the endoscope in step (825). This will provide for movement of the endoscope (901) in all directions. The movement will help to reveal tears or holes in the sleeve which may only be apparent when the endoscope (901) is positioned in a particular fashion. In particular, movement will cause the rubber at the moving portion to be stretched or flexed as it may do during the course of both a procedure and cleaning. Further, it tests for leaks in seals related to manipulation controls.

Once the user has completed the movement, the user will indicate to the control system (401) that they have completed manipulation in step (827). In the depicted embodiment this indication is made by pushing the lit button (821A). The tester (10) may then continue the test by taking another pressure reading in step (826). If the user does not indicate that the knobs have been manipulated within a certain time window, the system will generally time out and indicate an error condition in step (831) because the knobs were not manipulated.

Assuming that no error occurs and the test continues, a predetermined time after knob manipulation is completed (generally very shortly thereafter) the user will be indicated to press or manipulate buttons on the endoscope in step (833). This may occur by having button (421B) begin flashing. In an alternative embodiment the button manipulation may be instructed at the same time as knob manipulation. The user will now grasp the endoscope (901) and manipulate buttons related to various operations of the endoscope (901) in step (833). This may serve to move the endoscope (901) in the same way as the manipulation of the knobs did, but generally, and often more importantly, will test for any holes in the button seals. Once all buttons have been depressed and released, the user will again indicate to the control system (301) in step (834) that the manipulation is completed and the testing will continue. Again, if the user does not indicate that button manipulation was performed in a prespecified time period, an error condition may be reported in step (835).

It should be apparent to one of ordinary skill in the art that the manipulation of buttons and knobs provides for benefits to the integrity tester's (10) accuracy. In particular, in order to manipulate buttons or knobs, the endoscope (901) is moved at least once during testing, this may provide for a hole to be revealed and allowed to open which was held shut by the initial placement of the endoscope (901). This can occur for instance, if the endoscope (901) principle tubing is placed so that it is coiled or where one portion overlaps another. While the holding device (501) is designed to minimize this, due to practical size considerations it is unlikely to be completely eliminated. Further, the manipulation allows for components which can be damaged by interaction with an operator to be tested and to be tested under all conditions that the endoscope may experience during use or cleaning. Therefore, if a hole exists in a portion of a button cover designed to flex, but that hole is only revealed when the material is flexed, it is detected by the flexing and can be fixed before it presents a major concern. While the pictured embodiment also provides that the manipulation be performed by the user, this is by no means required and in an alternative embodiment robotic or similar manipulation systems may alternatively be used to automatically perform the manipulation.

Once all manipulations have been indicated to be performed, the testing will generally continue to take pressure readings in step (837) and not between tests in step (838) for a predetermined time period until reaching the final pressure tests in step (839) when the period of testing is completed. This period of testing would generally have been selected in step (810) or (812) and will generally be between one and five minutes. Longer periods (3 minutes and over) are generally preferred to provide increased sensitivity but are not required. The period may be calculated so that the selected length of the complete test includes the time of manipulation, or may be selected to count time only after the manipulation is completed. Depending on embodiment, during steps (837) and (832), pressure measurements will be periodically taken and sent to the control system (301) until the time period has passed. Once all measurements have been taken, the control system (301) will evaluate the pressure loss over the period.

If the control system (301) determines pressure was not maintained during the testing in step (841), the integrity tester (10) will indicate that the endoscope (901) has failed the pressure test in step (843). Otherwise, the integrity tester (10) will determine that the endoscope (901) has passed the pressure test and so indicate in step (844). The integrity tester (10) will generally indicate the outcome of the pressure test to the user via the interaction system (401) usually by activating the appropriate light (417).

Once the integrity tester (10) has determined that the endoscope (901) has passed or failed the pressure test, the next test determines if the endoscope (901) includes any fluid within its internals in step (843). The integrity tester (10) may start the humidity test automatically following the conclusion of the pressure test, or may request input from the user about whether to commence the humidity test. If the test is to go forward in step (845), the humidity test will generally look for a difference in humidity inside the endoscope (901) compared to the outside environmental air. As the air pumped into the endoscope (901) was dried by desiccator (127) prior to entering the endoscope (901), it should still be dry and will generally be dryer than the outside air. If the system includes a hole, however, the dry air (which was under pressure) will often have escaped out the hole during the pressure test and environmental air will be pulled through the hole into the endoscope (901) during the humidity test.

The baseline for environmental humidity was established in step (817). To test for humidity inside the endoscope (901), the valve (123) will open and the air in the air enclosure, which includes the air in the endoscope (901), will be vented into contact with the humidity detector (121) in step (847). At the start of the venting, the air inside the air enclosure is generally at higher pressure than air in the vent path. If there was little loss of pressure, the air in the air enclosure will generally push itself through the valve (123) to the humidity tester, however, it is often desired to pull additional air from the air enclosure. In this situation, an air withdrawing system may be used to suck or pull air from inside the air enclosure. The air withdrawing system may be of any type known (101) to one of ordinary skill in the art and, in an embodiment, comprises a vacuum pump. In the depicted embodiment, the air withdrawing system simply comprises the air compressor (101). The air compressor (101) can operate in reverse to suck air from the endoscope (901) back to the humidity detector (121). Alternatively, the air compressor (101) can push air into the air enclosure through valve (113) (which would be opened) while valve (123) is open creating a flow of air through the air enclosure.

If there is fluid in the endoscope (901), the fluid will usually be at least partially vaporized by the pressurized air previously applied and be pulled into the tube (201) and into the humidity detector (121) during this step. The humidity detector (121) will then register that the humidity level is of a certain level. Generally if this level is at or above a trigger amount determined from the baseline of the environment, an indicator of fluid invasion is triggered in step (845). While the air provided to the endoscope (901) is essentially dry, it is likely that air previously in the endoscope (901) included some humidity and therefore an amount based on the environmental baseline, instead of absolute dryness, is preferably used as a trigger. In an alternative embodiment, an absolute dryness level may be used or an independently chosen level of humidity may be selected. While the humidity detector can determine if there is water vaporization inside the endoscope, if the endoscope includes a hole, the dry air will generally have at least partially escaped, and environmental air will now be present in the endoscope from the pull of the air compressor (101) by being sucked in through the hole. Therefore, a hole may alternatively be detected by the humidity of the environmental air being detected.

While it is necessary to have vaporized water be provided to the humidity detector (121), it should be recognized that a large quantity of water can damage the humidity detector (121). Because of this situation, in an embodiment, there is included a trap (125) in the air enclosure. Alternatively, the control system (301) may include certain protection mechanisms. The trap (125) may comprise a liquid water sensor located in the chamber (109) so that if liquid water is detected entering the chamber (109), the valve (123) is closed to prevent the water from reaching the humidity detector (121) and the endoscope (901) is failed. In an alternative embodiment, the trap (125) can simply be arranged so as to capture liquid water and not allow it to continue to the humidity detector (121) such as through a "U" pipe trap. In a still further embodiment the control system may recognize that a large hole exists and fluid invasion is sufficiently likely that the humidity test is simply not performed.

If the humidity is sufficiently low inside the endoscope (901) insufficient humidity is detected in step (849) and, it is determined by the control system (301) that there has been no fluid invasion, or at least not sufficient fluid invasion to generate concern, the endoscope (901) passes humidity testing and the humidity "pass" result is indicated in step (851). A passing score of the humidity testing does not necessarily indicate that there is no fluid in the scope, it instead is used as an extra indicator. If a pressure sensor (111) has previously indicated a hole, a drop of water may exist below the hole in the endoscope (901). This drop may not be sufficiently vaporized to indicate a sufficient increase in humidity. This situation, however, is one which is easily detected during the hole repair procedure anyway. If the endoscope fails the humidity test, that result is indicated in step (853).

While the methodology of FIG. 6 provides for a single pass through each of the testing processes, one of ordinary skill in the art would understand that each test may be performed more than once to provide for increased assurance that the endoscope (901) indeed has no leaks or fluid invasion. In a still further embodiment the two tests may be used independently of each other with either one or the other test being performed.

Presuming the endoscope (901) has passed the performed pressure and humidity tests, the endoscope (901) will be passed and will generally proceed through the cleaning and sterilization process in the normal manner. Once cleaning and sterilization has been completed, the endoscope (901) will generally again be tested on the integrity tester (10) to make sure it was not damaged in the cleaning process. If the endoscope (901) passes again, the endoscope (901) is ready for reuse and may be returned to service.

If the endoscope (901) fails any test, the endoscope (901) will be indicated as failing. The endoscope (901) will still be cleaned and sterilized if that procedure has not yet been performed, but will be cleaned while filled with pressurized air to avoid for additional, or any, fluid invasion. To provide for ease during this cleaning, the integrity tester (10) may provide pressurized air to the endoscope to maintain a constant air pressure within the endoscope (901) during cleaning. The pressure will generally be sufficiently high to avoid any additional fluid invasion during the cleaning process, 3 lbf/in² may be used in an embodiment, and the indication system (401) may allow for a user to indicate that pressurized air is desired and control the air compressor (101) to provide the air. This will generally be through a button such as controlled air button (451). Because the air can be provided by the integrity tester (10), there is no need for the user to disconnect the endoscope (901) before commencing with cleaning if the endoscope (901) was failed.

In an embodiment of he integrity tester (10), the integrity tester (10) may record intermediate measurements and may measure for a loss of pressure at a wide variety of points and during various actions, the particular values for pressure loss and even time, can be determined and provided in an embodiment of the invention. This can provide for indications to repair personnel where the location of a hole is. it will not necessarily provide a pinpoint location, but may indicate that the hole is associated with button pressing actions, or with movement. In an embodiment, all calculations and measurements from the testing process are recorded in memory (305) for such later use.

In an embodiment, the integrity tester (10) will be attached to a printer or other hardcopy generator (181). This allows the operator to print out an indication of what happened during the test (including pass, fail and other details) to keep with the endoscope (901) or with a centralized records system. In the event of a failure requiring repair, the printout can be put with the endoscope (901) and provided to those responsible for repair. Based on the type of failure (pressure or humidity) and the severity of the failure, the repair technician may therefore have more of an idea of what needs to be repaired, or if additional tests need to be performed to determine the exact nature of the repair. This helps to improve the efficiency and ease of repair. In addition, if a loss of pressure is sudden and related specifically to the movement of knobs or depression of buttons, the printout may make such an indication so as to provide the repair technician with an indication that the problem is probably associated with one of those areas. This can also provide for improved repair response by localizing a point to first examine.

In the event that the endoscope (901) failed a humidity test, this information can also be provided. In this case, the repair technician can know that the endoscope (901) needs to be disassembled and dried. Further, if no pressure loss was detected, but a humidity test was failed, repair personnel may perform more exacting tests on the endoscope (901) to determine if a very small, but important hole, exists, or if a hole may exist in conjunction with a knob movement or button press which was not accurately detected, for instance if a technician had skipped the step but indicated it had been performed. Alternatively, the technician can test the integrity of cap fittings or similar devices to try and locate a possible point of fluid entry.

In addition to or alternatively to providing for a printout, the integrity tester (10) may be connected to a computer network such as, but not limited to, an intranet, extranet, internet, or the Internet. In this situation, the information may be reported to a central data repository. For instance, if an endoscope (901) is indicated as failing, a notice may be sent to repair personnel to expect to receive the endoscope (901). The data collected by the control system (301) may also be forwarded and provided to repair personnel for evaluation to determine what may be wrong with the endoscope (901). Such central control can also provide for an additional level of safety. If an endoscope (901) fails the test but is inadvertently returned to service, it may be the case where the medical personnel using the endoscope (901) will double check that the endoscope (901) has been cleared before using it by entering the serial number again at the starting point of the medical procedure into their computer. In this situation, the serial number lookup at the central records area would indicate that the endoscope (901) should not be used and medical personnel can reject it for repairs and obtain a new scope. This can protect from possible increased damage from use, or from a situation possibly dangerous to the patient.

## Claims

1. A method for testing the integrity of an endoscope (901) comprising the steps of: obtaining an endoscope (901); supplying gas to an air enclosure which includes an internal volume of said endoscope (901) to pressurize said air enclosure; sealing said air enclosure; measuring the pressure of said gas in said air enclosure; and using the outcome of said steps of measuring and re-measuring to determine if said pressure has changed sufficiently to indicate a leak in said endoscope (901), **characterized in that** the method further comprises the steps of instructing a user to manipulate said endoscope (901) while said air enclosure is pressurized, said manipulation causing movement of the endoscope (901); indicating that said manipulation has been completed; and re-measuring the pressure of said gas in said air enclosure after said manipulation.

2. The method of claim 1 where said step of using comprises comparing the pressure from said step of measuring to said step of re-measuring and comparing said difference to a predetermined minimum value or in said step of measuring, said pressure of said gas is at least 27579 Pa (4 lbf/in²) or the method further comprises the step of placing said endoscope (901) in a holding device (501) prior to said step of measuring.

3. An integrity tester (10) for an endoscope (901), **characterized by** means for supplying gas to an air enclosure which includes an internal passage of said endoscope (901) to pressurize said air enclosure; means for sealing said air enclosure; means for measuring the pressure of said gas in said air enclosure; means for manipulating said endoscope (901) while said air enclosure is pressurized, where said manipulation causes movement of the endoscope (901); means for indicating and detecting that said manipulation is complete; means for re-measuring the pressure of said gas in said air enclosure after said manipulation; and means for computing a result using the outcome of said steps of measuring and to determine if said pressure has changed sufficiently to indicate a leak in said endoscope (901).

4. The tester (10) of claim 3 wherein said means for manipulating comprises an interaction system (401) for instruction of a user to manipulate said endoscope (901) and indicate to said tester (10) that said manipulation has been completed.

## Patentansprüche

1. Verfahren zum Testen der Integrität eines Endoskops (901), welches die Schritte umfaßt, daß man: ein Endoskop (901) erhält; Gas einem Lufteinschluss zuführt, der ein inneres Volumen des Endoskops (901) einschließt, um den Lufteinschluss unter Druck zu setzen; Versiegeln des Lufteinschlusses; Messen des Druck des Gases in dem Lufteinschluss; und Verwenden des Ergebnisses der Schritte des Messens und des nochmaligen Messens, um zu bestimmen, ob sich der Druck signifikant geändert hat, um ein Leck in dem Endoskop (901) anzuzeigen, **dadurch gekennzeichnet, daß** das Verfahren weiter die Schritte umfaßt, daß man den Anwender instruiert, das Endoskop (901) zu manipulieren, während der Lufteinschluss unter Druck steht, wobei die Manipulation eine Bewegung des Endoskops (901) hervorruft; anzeigt, daß die Manipulation abgeschlossen ist; und nochmalig den Druck des Gases in dem Lufteinschluss nach der Manipulation mißt.

2. Verfahren nach Anspruch 1, worin der Schritt des Verwendens umfaßt, daß man den Druck aus dem Schritt des Messens mit dem Schritt des nochmaligen Messens vergleicht und die Differenz mit einem vorbestimmten Mindestwert vergleicht oder im Schritt des Messens der Druck des Gases mindestens 27579 Pa (4 lbf/in²) beträgt oder das Verfahren weiter den Schritt umfaßt, daß man das Endoskop (901) in einer Haltevorrichtung (501) vor dem Schritt des Messens platziert.

3. Tester (10) zum Testen der Unversehrtheit/Integrität eines Endoskops (901), **gekennzeichnet durch** Mittel zum Zuführen von Gas zu einem Lufteinschluss, welcher einen inneren Durchgang des Endoskops (901) einschließt, um den Lufteinschluss unter Druck zu setzen; Mittel zum Versiegeln des Lufteinschlusses; Mittel zum Messen des Drucks des Gases in dem Lufteinschluss; Mittel zum Manipulieren des Endoskops, während der Lufteinschluss unter Druck steht, wobei die Manipulation eine Bewegung des Endoskops (901) hervorruft; Mittel zum Anzeigen und Nachweisen, daß die Manipulation abgeschlossen ist; Mittel zum nochmaligen Messen des Drucks des Gases in dem Lufteinschluss nach der Manipulation; und Mittel zum Berechnen eines Ergebnisses unter Verwendung der Ergebnisse der Schritte des Messens und zum Bestimmen, ob sich der Druck ausreichend geändert hat, um ein Leck in dem Endoskop (901) anzuzeigen.

4. Tester (10) nach Anspruch 3, worin das Mittel zum Manipulieren ein Interaktionssystem (401) umfasst, zum Instruieren eines Anwenders, das Endoskop (901) zu manipulieren und dem Tester (10) anzuzeigen, daß die Manipulation abgeschlossen ist.

## Revendications

1. Procédé pour tester l'intégrité d'un endoscope (901), comprenant les étapes consistant à: obtenir un endoscope (901); fournir du gaz à une enceinte d'air qui inclut un volume interne dudit endoscope (901) pour pressuriser ladite enceinte d'air; fermer de manière étanche ladite enceinte d'air; mesurer la pression dudit gaz dans ladite enceinte d'air; et utiliser le résultat desdites étapes de mesure et de remesure pour déterminer si ladite pression a changé suffisamment pour indiquer une fuite dans ledit endoscope (901), **caractérisé en ce que** le procédé comprend en outre les étapes consistant à former un utilisateur à la manipulation dudit endoscope (901) pendant que ladite enceinte d'air est pressurisée, ladite manipulation causant un mouvement de l'endoscope (901); indiquer que ladite manipulation a été réalisée; et remesurer la pression dudit gaz dans ladite enceinte d'air après ladite manipulation.

2. Procédé selon la revendication 1, dans lequel ladite étape d'utilisation comprend une comparaison de la pression obtenue à ladite étape de mesure avec ladite étape de remesure et une comparaison de ladite différence avec une valeur minimale prédéterminée ou dans lequel dans ladite étape de mesure, ladite pression dudit gaz est d'au moins 27579 Pa (4 lbf/in²) ou dans lequel le procédé comprend en outre l'étape de placement dudit endoscope (901) dans un dispositif de maintien (501) avant ladite étape de mesure.

3. Dispositif de test d'intégrité (10) pour un endoscope (901), **caractérisé par** un moyen pour fournir du gaz à une enceinte d'air qui inclut un passage interne dudit endoscope (901) pour pressuriser ladite enceinte d'air; un moyen pour fermer de manière étanche ladite enceinte d'air; un moyen pour mesurer la pression dudit gaz dans ladite enceinte d'air; un moyen pour manipuler ledit endoscope (901) pendant que ladite enceinte d'air est pressurisée, où ladite manipulation cause un mouvement de l'endoscope (901); un moyen pour indiquer et détecter que ladite manipulation est terminée; un moyen pour remesurer la pression dudit gaz dans ladite enceinte d'air après ladite manipulation; et un moyen pour calculer un résultat à l'aide du résultat desdites étapes de mesure et pour déterminer si ladite pression a changé suffisamment pour indiquer une fuite dans ledit endoscope (901).

4. Dispositif de test (10) selon la revendication 3, dans lequel ledit moyen de manipulation comprend un système d'interaction (401) pour former un utilisateur à manipuler ledit endoscope (901) et indiquer audit dispositif de test (10) que ladite manipulation a été réalisée.
